# EUROPÄISCHE PATENTSCHRIFT

(11) **EP 3 710 777 B1**
(45) Veröffentlichungstag und Bekanntmachung des Hinweises auf die Patenterteilung: **28.07.2021**
(21) Anmeldenummer: 18807550.1
(22) Anmeldetag: 08.11.2018
(51) Int. Cl.: G01B 11/24, G01B 11/245, G01B 11/27, G01N 21/952

(54) **VORRICHTUNG ZUR OPTISCHEN VERMESSUNG DES AUSSENGEWINDE-PROFILS VON ROHREN**
DEVICE FOR THE OPTICAL MEASUREMENT OF THE EXTERNAL THREAD PROFILE OF PIPES
DISPOSITIF POUR LA MESURE OPTIQUE DU PROFIL DE FILETAGE EXTÉRIEUR DE TUBES

(30) Priorität: 13.11.2017 AT 4412017
(43) Veröffentlichungstag der Anmeldung: 23.09.2020
(73) Patentinhaber: voestalpine Tubulars GmbH & Co KG, 8652 Kindberg-Aumühl (AT)
(72) Erfinder: KLARNER, Jürgen, 8662 St. Barbara Im Mürztal - Mitterdorf (AT); LEITNER, Reinhard, 8650 Kindberg (AT); WINKLER, Peter, 8670 Krieglach (AT); KARNER, Hannes, 8652 Kindberg-Aumühl (AT)
(74) Vertreter: Keschmann, Marc
(86) Internationale Anmeldenummer: PCT/AT2018/000091
(87) Internationale Veröffentlichungsnummer: WO 2019/090371

(56) Entgegenhaltungen:
- EP-A1- 2 392 896
- JP-A- 2009 121 900
- JP-A- 2013 246 143
- US-A1- 2015 199 827
- US-A1- 2016 018 214

## Beschreibung

Die Erfindung betrifft eine Vorrichtung zur optischen Vermessung des Außengewinde-Profils von Rohren umfassend eine Auflage für das zu vermessende Rohr, eine optische Vermessungseinheit mit wenigstens einer Messvorrichtung, die eine Lichtquelle und eine im Strahlengang der Lichtquelle angeordnete Kamera zur Aufnahme eines Schattenbildes des Außengewinde-Profils umfasst, und ein Tragelement, wobei die optische Vermessungseinheit, insbesondere starr, auf dem Tragelement angeordnet ist, das um drei Raumachsen verschwenkbar gehalten ist.

Weiters betrifft die Erfindung ein Verfahren zur optischen Vermessung des Außengewinde-Profils von Rohren mit Hilfe einer solchen Vorrichtung.

An die Verschraubung von Rohrabschnitten werden hohe Anforderungen gestellt, wenn die Dichtheit der Verschraubung von Bedeutung ist. Dies ist beispielsweise bei Rohrleitungen für den Transport von unter Druck stehenden Fluiden, wie z.B. Gas oder Öl, oder bei Steigrohren für die Öl- und Gasförderung der Fall. Das mit einem Außengewinde versehene Rohrende eines Rohres wird hierbei in ein mit einem entsprechenden Innengewinde versehenes Rohrende eines anschließenden Rohres verschraubt. Um die Dichtheit zu gewährleisten, ist eine hochpräzise Herstellung des Gewindes mit der vorgesehenen Gewindegeometrie erforderlich. Bei der Herstellung solcher Rohre ist es daher üblich, die Gewindegeometrie im Rahmen einer Qualitätskontrolle zu vermessen.

Aus der EP 2767799 A1 ist ein Verfahren zur automatisierten Vermessung von Rohrendgewinden im laufenden Prozess der Gewindeherstellung bekannt, bei der ein Reinigungsprozess nach der Gewindeherstellung erfolgt, anschließend ein Trocknungsvorgang und danach die Vermessung des Rohrgewindes unter sauberer Atmosphäre durchgeführt wird.

Aus der EP 2135030 B1 geht ein Verfahren mit einer Vorrichtung zur optischen Vermessung von Außengewindeprofilen an Rohrenden hervor, welches ebenso in der Fertigungslinie getaktet Anwendung findet. Das Gewindeprofil wird mit einer Vermessungseinheit bestehend aus einer Kamera und einer Gegenlichtquelle mittels der Erfassung eines tangentialen Schattenbildes der Gewindekontur ermittelt und deren ausgewertete optische Signale mit Sollvorgaben verglichen. Die Position des Rohrendes in Bezug auf die Vermessungseinheit wird kontinuierlich mittels Lasertriangulation erfasst, wobei durch eine durch Rotation und Translation durchgeführte Relativbewegung zwischen Rohr und Vermessungseinheit eine Abtastung des Gewindeprofils erfolgt.

Ein Messaufbau für die Gewindevermessung an einem Rohrende mit einer Kamera und einer Lichtquelle zur Ermittlung eines Schattenbildes ist auch Inhalt der CN 105716528. Die Messeinrichtung besteht hierbei aus zwei Kameras mit zwei zugeordneten Lichtquellen, sodass eine obere und untere Gewindeabbildung erfolgen kann.

Ein gleichartiger Messaufbau ist der EP 2392896 A1 zu entnehmen, bei der eine Messsensorik an einem Messkopf festgelegt ist, der rotatorisch und translatorisch an einem Rahmen der Messvorrichtung bewegbar ist. Die Messvorrichtung besteht aus einem computergesteuerten Lasersensor, der mittels eines computergesteuerten mechanischen Bewegungssystems eine Abtastung des Gewindes vornimmt.

Die Dokumente JP 2013 246143 A, US 2015/199827 A1, EP 2 392 896 A1 sowie US 2016/018214 A1 offenbaren Vorrichtungen und Verfahren zur optischen Vermessung des Außengewinde-Profils von Rohren.

Bei der optischen Vermessung eines Außengewindes mit Hilfe von Schattenbildern besteht das Problem, dass der Strahlengang der Lichtquelle bzw. die optische Achse der Lichtquelle im rechten Winkel zu der Rohrachse des zu vermessenden Rohres ausgerichtet sein muss, um korrekte Messergebnisse zu erhalten, sodass vor der Vermessung eine Einjustierung erfolgen muss. Alternativ kann die Relativposition der Vermessungseinheit relativ zum Rohr ermittelt werden und die Messergebnisse können in Abhängigkeit von den Relativpositionswerten korrigiert werden. Hierfür ist beim Gegenstand der EP 2135030 B1 eine Lasertriangulation erforderlich, womit ein zusätzlicher apparativer Aufwand verbunden ist.

Die vorliegende Erfindung zielt daher darauf ab, gegenüber den bekannten Vorrichtungen und Messverfahren mittels Schattenbildern eine Vereinfachung der Messmethodik und des Aufbaus der Messvorrichtung zu erreichen. Gleichzeitig soll eine hochpräzise Vermessung gewährleistet sein, bei der optisch verzerrte Schattenbilder vermieden werden.

Zur Lösung dieser Aufgabe sieht die Erfindung bei einer Vorrichtung der eingangs genannten Art im Wesentlichen vor, dass die optische Vermessungseinheit wenigstens zwei

Messvorrichtungen aufweist, deren Strahlengänge einander kreuzen. Dadurch, dass zwei jeweils eine Lichtquelle und eine Kamera umfassende Messvorrichtungen vorgesehen sind, können Schattenbilder in zwei einander kreuzenden Richtungen aufgenommen werden, wobei die so erhaltenen Schattenbilder sowohl zur Überprüfung der korrekten Ausrichtung der Vermessungseinheit in Bezug auf die Rohrachse als auch für die eigentliche Vermessung des Außengewindes herangezogen werden können. Weil hierbei die in zwei einander kreuzenden Richtungen aufgenommenen Schattenbilder verwendet werden, können Abweichungen der Vermessungseinheit von der korrekten Ausrichtung relativ zur Drehachse in zwei Betrachtungsrichtungen festgestellt werden. Die Einjustierung der Vermessungseinheit beruht dabei darauf, Abweichungen des Strahlengangs der Lichtquelle von einem rechten Winkel zu der Rohrachse des zu vermessenden Rohres festzustellen und ggf. auftretende Abweichungen durch Verschwenkung des Tragelements der Vermessungseinheit zu korrigieren.

Gemäß einer bevorzugten Ausbildung kreuzen die Strahlengänge von zwei Messvorrichtungen einander in einem Winkel von 90°. Dadurch kann eine Fehlausrichtung der Vermessungseinheit in zwei orthogonalen Raumrichtungen korrigiert werden, sodass die Messebene der Vermessungseinheit, welche von den Richtungsvektoren der einander kreuzenden Strahlengänge aufgespannt wird bzw. parallel zu den Richtungsvektoren liegt, tatsächlich in einer zur Rohrachse senkrechten Lage einjustiert werden kann. Bevorzugt liegen die Strahlengänge der zwei Messvorrichtungen in derselben Ebene, welche die Messebene darstellt.

Verschmutzungen, insbesondere Flüssigkeiten, die sich im Gewinde anlagern, könnten das Schattenrissbild verfälschen und zu falschen Messergebnissen führen. Daher sind die Messvorrichtungen bevorzugt derart anordenbar, dass der Strahlengang wenigstens einer Messvorrichtung einen Winkel von 10-80°, bevorzugt 25-65°, insbesondere 35-55°, mit der Senkrechten einschließt. Dadurch können an denjenigen Gewindebereichen, von denen die Schattenbilder aufgenommen werden, etwaige Reste von Schneidemulsionen ablaufen und haben damit keinen Einfluss auf eine Schattenrissgewindeabbildung, sodass vorab keine aufwendige Reinigung zu erfolgen hat.

Aus dem Schattenbild des Außengewindes des Rohres, welches neben dem Gewinde ggf. auch die Dichtflächen umfasst, können u.a. folgende Gewindeparameter in der Auswertung ermittelt werden:
- Gewindedurchmesser
- Gewindekegel
- Gewindesteigung
- Gewindehöhe
- Dichtsitzdurchmesser
- Dichtsitzwinkel

Da jede Art von mechanischer Verstellung der Vermessungseinheit zu Positionierungsungenauigkeiten und damit zu Messfehlern führen kann, wird die Vermessungseinheit bevorzugt ortsfest auf dem Tragelement angeordnet.

Damit mittels der Messvorrichtungen Schattenbilder an einer Vielzahl von Umfangsbereichen des Außengewindes erfolgen können, ist bevorzugt vorgesehen, dass das Tragelement um eine im rechten Winkel zur Messebene der Vermessungseinheit liegende Drehachse drehbar gelagert ist. Nach der Aufnahme von Schattenbildern an einer ersten Drehposition der Vermessungseinheit kann diese um einen bestimmten Winkel um die Drehachse weitergedreht werden, um an der neuen Drehposition weitere Schattenbilder aufnehmen zu können.

Ergänzend oder alternativ können, um den Messvorgang zu beschleunigen, wenigstens eine weitere, eine Lichtquelle und eine Kamera aufweisende Messvorrichtung an dem Tragelement angeordnet werden.

In konstruktiver Hinsicht sieht eine bevorzugte Ausführung in diesem Zusammenhang vor, dass eine um die Drehachse drehbar gelagerte Drehplattform vorgesehen ist, welche das Tragelement trägt. Durch eine Drehung der Drehplattform um die Drehachse kann eine Verdrehung der Vermessungseinheit um eine erste Raumachse realisiert werden. Die Verschwenkung um die zwei weiteren Raumachsen des räumlichen kartesischen Koordinatensystems erfolgt bevorzugt durch eine Konstruktion, bei der zwischen der Drehplattform und dem Tragelement eine Vorrichtung zur wenigstens zweiachsigen Verschwenkbarkeit des Tragelements relativ zur Drehplattform um zwei einander kreuzende, zur Messebene parallele Drehachsen, insbesondere ein Hexapod, vorgesehen ist.

Alternativ kann der Hexapod am ortsfesten Gehäuse und die Drehplattform zwischen Hexapod und Tragelement angeordnet werden.

Eine weitere bevorzugte Ausbildung sieht vor, dass die wenigstens zwei Messvorrichtungen einen telezentrischen Strahlengang aufweisen. Durch den Einsatz von telezentrischen Objektiven an der Lichtquelle kann die Messgenauigkeit garantiert werden, ohne dass der Abstand zwischen dem zu vermessenden Außengewinde und der Kamera bekannt sein muss, da innerhalb eines Abstandsbereiches von einigen Millimetern die Messung nicht durch eine perspektivische Projektion verändert wird. Die telezentrische Beleuchtung erzeugt einen Strahl parallelen Lichts, sodass Reflexionen am Gewinde soweit wie möglich minimiert sind.

Für kleinere Rohrdurchmesser ist ein Paar aus Lichtquelle und Kamera je Messvorrichtung ausreichend, da ein Schattenbild bereits die beiden relativ zur Rohrachse diametral gegenüber liegenden Gewindebereiche, die Dichtflächen und die Stirnflächen erfasst. Bei größeren Rohrdurchmessern werden die beiden relativ zur Rohrachse diametral gegenüber liegenden Bereiche des Rohrgewindes, die Dichtflächen und die Stirnflächen mittels zweier Messvorrichtungen gesondert ermittelt. Die Ausbildung ist zu diesem Zweck bevorzugt derart getroffen, dass den wenigstens zwei Messvorrichtungen jeweils eine mit dazu parallel verlaufendem Strahlengang ausgebildete weitere Messvorrichtung zugeordnet ist.

Um Störungen aus dem Umfeld zu eliminieren, ist die Drehplattform bevorzugt auf einem ortsfesten Maschinenständer befestigt, der in einem schwingungsfrei gelagerten Fundament verankert ist.

Um Umwelteinflüsse wie z.B. Staub, Emulsionsnebel, Fremdlicht, Zugluft und Kondensatbildung zu minimieren, ist bevorzugt vorgesehen, dass die Vorrichtung in einem Schutzgehäuse angeordnet ist.

Zur Kalibrierung der Vermessungseinheit ist bevorzugt eine Kalibriereinrichtung vorgesehen, welche ein in das Bildfeld der Vermessungseinheit und aus diesem heraus verfahrbares Kalibiertarget umfasst.

Gemäß einem zweiten Aspekt betrifft die Erfindung ein Verfahren zur optischen Vermessung des Außengewinde-Profils von Rohren mit Hilfe der erfindungsgemäßen Vorrichtung, umfassend die folgenden Schritte:
a) Anordnen des zu vermessenden Rohres auf der Auflage, sodass die Rohrachse quer zu der Messebene der Vermessungseinheit verläuft und das Außengewinde im Strahlengang zwischen den Lichtquellen und den zugeordneten Kameras angeordnet ist,
b) Ausrichten der Vermessungseinheit derart, dass die Messebene einen rechten Winkel mit der Rohrachse einschließt,
c) Aufnehmen von Schattenbildern des Außengewindes mittels der Kamera wenigstens einer Messvorrichtung sowie Auswerten der Schattenbilder.

Das Ausrichten der Vermessungseinheit gemäß Schritt b) umfasst bevorzugt folgende Schritte:
- Aufnehmen von Schattenbildern der Stirnfläche des Rohres in zwei verschiedenen, in der Messebene liegenden Richtungen des Strahlengangs, um ein erstes und ein zweites Schattenbild zu erhalten,
- ein- oder zweiachsiges Verschwenken der Vermessungseinheit bis das erste und das zweite Schattenbild der Stirnfläche einer geraden Linie entspricht.

Alternativ umfasst das Ausrichten der Vermessungseinheit gemäß Schritt b) folgende Schritte:
- Aufnehmen eines Schattenbilds von zwei bezüglich der Rohrachse diametral gegenüberliegenden Stellen des Außengewindes in einer ersten, in der Messebene liegenden Richtung des Strahlengangs, um ein erstes und ein zweites Schattenbild des Außengewindes zu erhalten,
- Ermitteln, anhand des ersten und des zweiten Schattenbildes des Außengewindes, der Symmetrieachse des Außengewindes,
- Ermitteln der Winkelabweichung der Symmetrieachse von einer senkrecht zur Messebene liegenden Achse,
- einachsiges Verschwenken der Vermessungseinheit, bis die Winkelabweichung 0° beträgt,
- Wiederholen dieser Schritte, wobei das Schattenbild von zwei bezüglich der Rohrachse diametral gegenüberliegenden Stellen des Außengewindes in einer zweiten, in der Messebene liegenden Richtung des Strahlengangs aufgenommen wird, wobei die erste und die zweite Richtung quer zueinander verlaufen, insbesondere in einem Winkel von 90°.

Die Schattenbilder in Schritt c) können in wenigstens zwei verschiedenen, in der Messebene liegenden Richtungen des Strahlengangs aufgenommen werden. Bevorzugt wird eine Vielzahl von Schattenbildern in unterschiedlichen Richtungen des Strahlenganges aufgenommen, um das Außengewinde möglichst über seinen gesamten Umfang zu vermessen.

Die Vermessung kann besonders effizient erfolgen, wenn Schritt c) das insbesondere gleichzeitige Aufnehmen von Schattenbildern mittels der Kameras der wenigstens zwei Messvorrichtungen umfasst. Dadurch kann die Anzahl der gleichzeitig erhaltenen Schattenbilder zumindest verdoppelt werden.

Bevorzugt erfolgt das Aufnehmen von Schattenbildern in Schritt c) zuerst in einer ersten Drehposition der Vermessungseinheit, worauf die Vermessungseinheit um einen vorbestimmten Winkel um eine senkrecht zur Messebene verlaufende Drehachse gedreht wird und das Aufnehmen von Schattenbildern danach in einer zweiten Drehposition der Vermessungseinheit erfolgt.

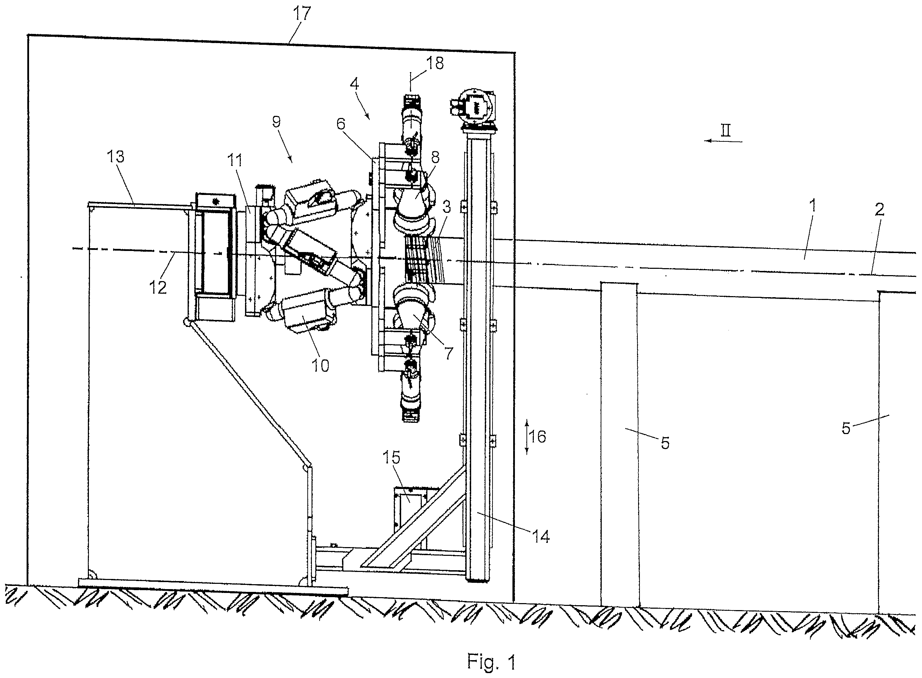

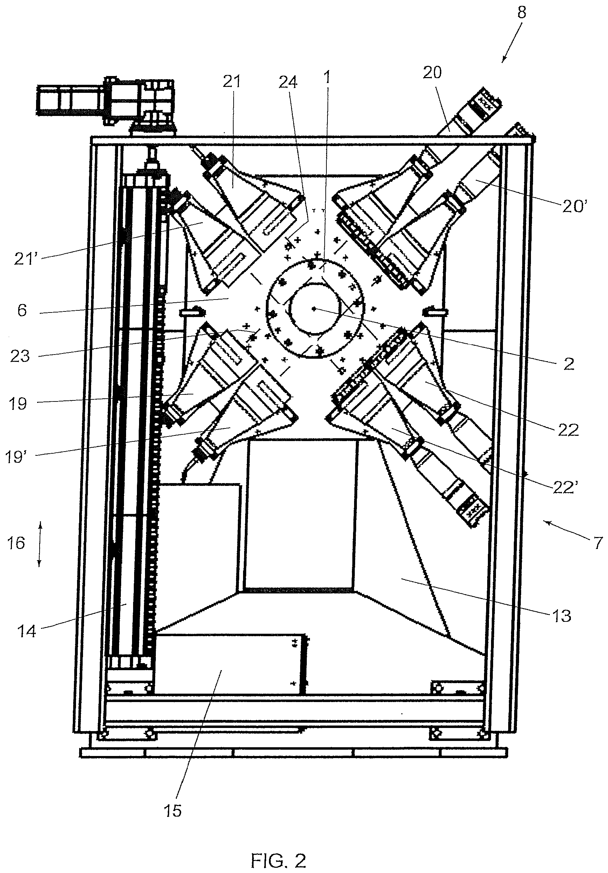

Die Erfindung wird nachfolgend anhand eines in der Zeichnung schematisch dargestellten Ausführungsbeispiels näher erläutert. In dieser zeigen Fig. 1 eine Seitenansicht der erfindungsgemäßen Vorrichtung und Fig. 2 eine Ansicht gemäß dem Pfeil II der Fig. 1.

In Fig. 1 ist ein zu vermessendes Rohr mit 1 bezeichnet. Das Rohr, dessen Rohrachse mit 2 bezeichnet ist, weist an seinem Ende ein Außengewinde 3 auf, dessen Profil mit Hilfe der Vermessungseinheit 4 optisch vermessen wird. Das Rohr 1 liegt auf einer einen Rollengang aufweisenden Auflage 5 auf, wobei die Ausrichtung des Rohres 1 relativ zur Vermessungseinheit 4 derart erfolgen soll, dass die Rohrachse 2 im rechten Winkel zur Messebene 18 der Vermessungseinheit 4 ausgerichtet ist. Um eine solche Ausrichtung zu ermöglichen, weist die Vermessungseinheit 4 ein Tragelement 6, insbesondere in Form einer Plattform, auf, welche die Messvorrichtungen 7 und 8 der Vermessungseinheit 4 tragen. Das Tragelement 6 ist über einen sechs Linearantriebe 10 umfassenden Hexapod 9 an einer Drehplattform 11 gehalten, sodass das Tragelement 6 mehrachsig relativ zur Drehplattform 11 verstellt, insbesondere verschwenkt werden kann. Die Drehplattform 11 ist um die Drehachse 12 relativ zum ortsfesten Gehäuse 13 drehbar gelagert, sodass dadurch eine Verdrehung der Vermessungseinheit 4 um die Drehachse 12 erfolgen kann. Der Drehplattform ist ein nicht näher dargestellter Drehantrieb zugeordnet, um die Drehplattform in Abhängigkeit von Stellsignalen einer Steuervorrichtung anzutreiben. Die Steuervorrichtung ist signalmäßig auch mit den Linearantrieben 10 des Hexapods 9 verbunden, sodass die Steuervorrichtung in der Lage ist, die Vermessungseinheit 4 in Abhängigkeit von Stellsignalen mehrachsig zu verstellen, um die Vermessungseinheit 4 mit ihrer Messebene 18 im rechten Winkel zur Rohrachse 2 auszurichten.

Weiters ist in Fig. 1 ein ortsfester Träger 14 ersichtlich, der eine Vorschubeinrichtung für eine Kalibrierplatte bzw. ein Kalibiertarget 15 aufweist, um diese in Richtung des Doppelpfeils 16 in den Erfassungsbereich der Messvorrichtungen 7 und 8 und aus dieser heraus zu verfahren.

Die erfindungsgemäße Messvorrichtung ist von einem Schutzgehäuse 17 umgeben, um Umwelteinflüsse wie z.B. Staub, Emulsionsnebel, Fremdlicht, Zugluft und Kondensatbildung zu eliminieren.

In Fig. 2 ist der Aufbau der Vermessungseinheit 4 dargestellt. Die Vermessungseinheit 4 umfasst wenigstens zwei Messvorrichtungen 7 und 8, die jeweils eine Lichtquelle und eine im Strahlengang der Lichtquelle angeordnete Kamera zur Aufnahme eines Schattenbildes des Außengewinde-Profils 3 aufweisen. Die Messvorrichtung 7 umfasst hierbei eine Lichtquelle 21 mit einem Strahlengang 24 sowie eine auf der gegenüberliegenden Seite des Rohres 1 im Strahlengang 24 angeordnete Kamera 22. Optional umfasst die Messvorrichtung 7 ein parallel dazu angeordnetes weiteres System aus Lichtquelle 21' und Kamera 22'. Die Messvorrichtung 8 umfasst eine Lichtquelle 19 mit einem Strahlengang 23 sowie eine auf der gegenüberliegenden Seite des Rohres 1 im Strahlengang 23 angeordnete Kamera 20. Optional umfasst die Messvorrichtung 8 ein parallel dazu angeordnetes weiteres System aus Lichtquelle 19' und Kamera 20'. Die Messvorrichtungen 7 und 8 sind starr auf dem Tragelement 6 befestigt, wobei die Strahlengänge 23 und 24 in einem rechten Winkel zueinander ausgerichtet sind.

Bei Rohren 1 mit kleinerem Durchmesser reicht ein einziges System aus Lichtquelle und Kamera je Messvorrichtung aus, um Schattenbilder des Außengewindes 3 an zwei bezüglich der Rohrachse 2 diametral gegenüberliegenden Stellen des Außengewindes zu erhalten. Bei Rohren 1 mit größerem Durchmesser kommen beide Systeme aus Lichtquelle und Kamera je Messvorrichtung zum Einsatz, wobei das eine System ein Schattenbild an der einen Umfangsstelle und das andere System ein Schattenbild an der diametral gegenüberliegenden Umfangsstelle erzeugt bzw. aufnimmt.

Anhand des folgenden Ausführungsbeispiels wird nun der Ablauf der Vermessung näher erläutert.

Das Rohr 1 wird der Vermessungseinheit 4 mit seinem Gewindeende mittels einer am Ende des Rollengangs angeordneten Vorrichtung zugeführt, wobei lediglich eine grobe Ausrichtung der Längs- und Höhenpositionierung erfolgt. Die Feinjustierung für die exakte Ausrichtung der Vermessungseinheit 4 relativ zur Rohrachse 2 kann mittels zweier Varianten erfolgen:

### Variante A:

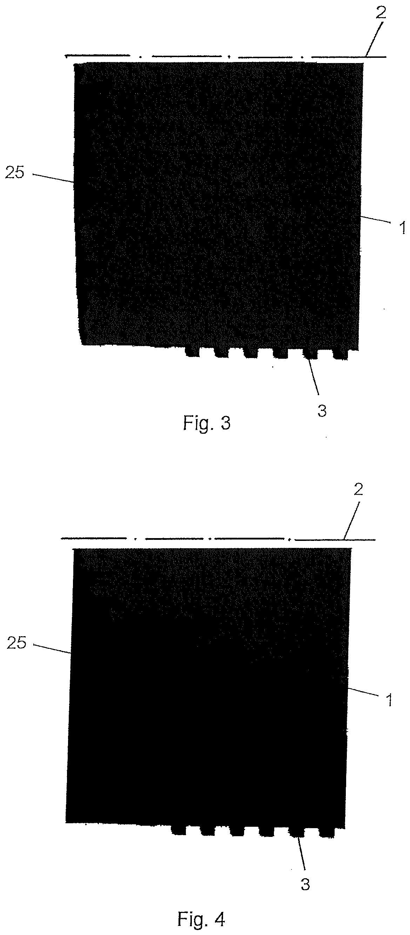

Dazu werden zwei Abbildungen der Rohrstirnfläche 25 als Schattenbild der zwei um 90° an dem Tragelement 6 versetzt angeordneten Messvorrichtungen 7 und 8 erfasst und die Nachjustierung wird mittels des Hexapods 9 solange vorgenommen, bis ein Schattenbild der Rohrstirnfläche 25 nicht mehr als eine Ellipse (Fig. 3), sondern als gerade Linienkante (Fig. 4) abgebildet wird. Im letzteren Fall ist sichergestellt, dass die von den Strahlengängen 23 und 24 aufgespannte Ebene (Messebene 18) senkrecht auf die Rohrachse 2 steht.

### Variante B:

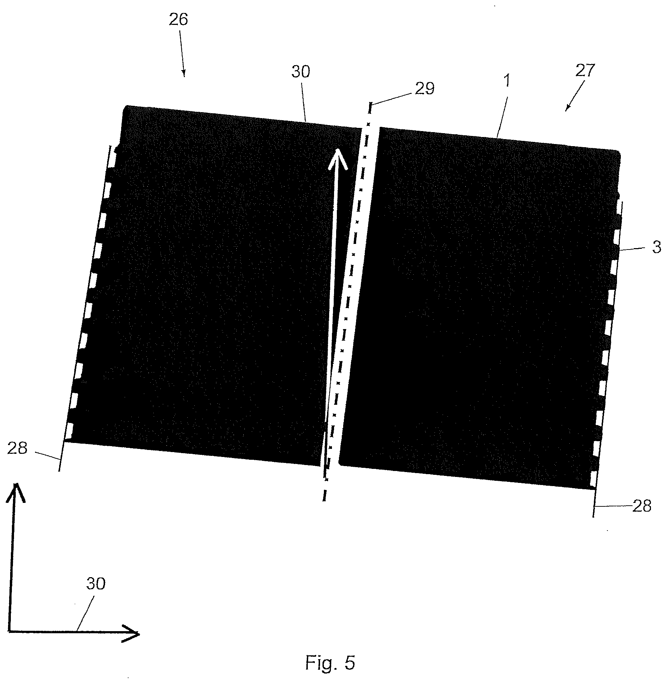

Mit einer der Messvorrichtungen 7, 8 werden vom Rohrende zwei Bilder 26,27 aufgenommen (linke und rechte Seite des Gewindes 2) und entlang des Gewindekegels wird jeweils eine Gerade 28 bestimmt (Fig. 5). Über den Kegel wird eine Rohrachse 29 berechnet. Diese Rohrachse 29 hat links und rechts jeweils denselben Abstand zum Gewindekegel. Der Neigungswinkel β zwischen Rohrachse 29 und Sensorkoordinatensytem 30 kann direkt vom Hexapod 9 nachjustiert werden. Der gleiche Vorgang wird über die andere der beiden Messvorrichtungen 7,8, welche um 90° versetzt ist, durchgeführt. Auch hier wird der Neigungswinkel des Tragelements 6 mit Hilfe des Hexapod 9 korrigiert. Nach der beschriebenen Korrektur des Neigungswinkels des Tragelements 9 in beiden senkrecht zueinander stehenden Ebenen ist die Vermessungseinheit 4 so auf das Rohrende ausgerichtet, dass die Messebene 18 senkrecht auf die Rohrachse 2 steht.

Nach der beschriebenen Ausrichtung können im Rahmen der eigentlichen Messungen aus dem Schattenbild des Endabschnittes des Rohres 1, welches neben dem Gewinde 3 auch die Dichtflächen umfasst, u.a. folgende Gewindeparameter in der Auswertung ermittelt werden:
- Gewindedurchmesser
- Gewindekegel
- Gewindesteigung
- Gewindehöhe
- Dichtsitzdurchmesser
- Dichtsitzwinkel

Da jede Art von mechanischer Verstellung der Vermessungseinheit 4 zu Positionierungsungenauigkeiten und damit zu Messfehlern führen kann, werden die Messvorrichtungen 7,8 ortsfest auf dem Tragelement 6 angeordnet.

Verschmutzungen, insbes. Flüssigkeiten, die sich im Gewinde 2 anlagern, könnten das Schattenrissbild verfälschen und zu falschen Messergebnissen führen. Daher wird vorteilhaft die Vermessungseinheit 4 nicht in einer horizontalen bzw. vertikalen Anordnung, sondern mit zur Horizontalen geneigtem Strahlengang auf dem Tragelement 6 platziert (siehe Fig. 2), sodass etwaige Reste von Schneidemulsionen ablaufen können und damit keinen Einfluss auf eine Schattenrissgewindeabbildung haben und keine aufwendige Reinigung vorab zu erfolgen hat.

Die Messapparatur umfasst weiters eine Vorrichtung, die ein Kalibrationstarget 15 automatisch in das Bildfeld der Vermessungseinheit einbringt.

### Messaufbau:

Durch den Einsatz von telezentrischen Objektiven in den Lichtquellen 19 und 21 bzw. in den Kameras 20 und 22 kann die Messgenauigkeit garantiert werden, ohne dass der Abstand zwischen Gewinde 2 und Kamera 20 bzw. 22 bekannt sein muss, da innerhalb eines Abstandsbereiches von ca. +/einigen Millimetern die Messung nicht durch eine perspektivische Projektion verändert wird. Die telezentrische Beleuchtung erzeugt einen Strahl parallelen Lichts, sodass Reflexionen am Gewinde 2 soweit wie möglich minimiert sind. Die Steuerung der Anlage erfolgt über einen Auswerterechner bzw. über die Messsoftware selbst und kann mittels Steuerung in einen definierten Ablauf eingefügt werden. Für die Messung wird ein Koordinatensystem festgelegt, welches auf das Koordinatensystem des Hexapod 9 abgestimmt ist. Das bedeutet, dass durch eine Rotation der Drehplattform sich der Messkopf und auch das Messkoordinatensystem mitdreht.

### Messablauf:

Ein Messzyklus besteht aus der Messung der Gewindeparameter an mehreren Rotationspositionen am Rohr 1. Für jede dieser Rotationspositionen werden eine Grobausrichtung und eine darauffolgende Feinausrichtung ausgeführt. Bei der Grobausrichtung wird mittels einer Vorrichtung am Ende des Rollenganges eine schnelle Ausrichtung der Vermessungseinheit 4 auf das Rohrende durchgeführt. Dabei werden Korrekturen in allen Raumrichtungen und eine erste grobe Neigungskorrektur durchgeführt. Ist das Rohr 1 mechanisch bereits ausreichend genau in der Messanlage positioniert, kann bei Bedarf dieser Schritt entfallen.

Danach werden Messbilder aufgenommen und die Gewindeparameter ausgewertet.

## Patentansprüche

1. Vorrichtung zur optischen Vermessung des Außengewinde-Profils (3) von Rohren (1), umfassend eine Auflage (5) für das zu vermessende Rohr (1), eine optische Vermessungseinheit (4) mit wenigstens einer Messvorrichtung (7,8), die eine Lichtquelle (19,19',21,21') und eine im Strahlengang (23,24) der Lichtquelle (19,19',21,21') angeordnete Kamera (20,20',22,22') zur Aufnahme eines Schattenbildes des Außengewinde-Profils (3) umfasst, und ein Tragelement (6), wobei die optische Vermessungseinheit (4), insbesondere starr, auf dem Tragelement (6) angeordnet ist, das um drei Raumachsen verschwenkbar gehalten ist, **dadurch gekennzeichnet, dass** die optische Vermessungseinheit (4) wenigstens zwei Messvorrichtungen (7,8) aufweist, deren Strahlengänge (23,24) einander kreuzen.

2. Vorrichtung nach Anspruch 1, **dadurch gekennzeichnet, dass** die Strahlengänge (23,24) von zwei Messvorrichtungen (7,8) einander in einem Winkel von 90° kreuzen.

3. Vorrichtung nach Anspruch 1 oder 2, **dadurch gekennzeichnet, dass** die Messvorrichtungen (7,8) derart anordenbar sind, dass der Strahlengang (23,24) wenigstens einer Messvorrichtung (7,8) einen Winkel von 10-80°, bevorzugt 25-65°, insbesondere 35-55°, mit der Senkrechten einschließt.

4. Vorrichtung nach Anspruch 1, 2 oder 3, **dadurch gekennzeichnet, dass** die Richtungsvektoren der einander kreuzenden Strahlengänge (23,24) eine Messebene (18) aufspannen oder parallel zu einer Messebene (18) liegen, wobei das Tragelement (6) um eine im rechten Winkel zur Messebene (18) liegende Drehachse (12) drehbar gelagert ist.

5. Vorrichtung nach einem der Ansprüche 1 bis 4, **dadurch gekennzeichnet, dass** eine um die Drehachse (12) drehbar gelagerte Drehplattform (11) vorhanden ist, welche das Tragelement (6) trägt.

6. Vorrichtung nach Anspruch 5, **dadurch gekennzeichnet, dass** zwischen der Drehplattform (11) und dem Tragelement (6) eine Vorrichtung zur wenigstens zweiachsigen Verschwenkbarkeit des Tragelements (6) relativ zur Drehplattform (11) um zwei einander kreuzende, zur Messebene (18) parallele Drehachsen (12), insbesondere ein Hexapod (9), vorhanden ist.

7. Vorrichtung nach einem der Ansprüche 1 bis 6, **dadurch gekennzeichnet, dass** die wenigstens zwei Messvorrichtungen (7,8) einen telezentrischen Strahlengang aufweisen.

8. Vorrichtung nach einem der Ansprüche 1 bis 7, **dadurch gekennzeichnet, dass** den wenigstens zwei Messvorrichtungen (7,8) jeweils eine mit dazu parallel verlaufendem Strahlengang (23,24) ausgebildete weitere Messvorrichtung (7,8) zugeordnet ist.

9. Vorrichtung nach einem der Ansprüche 5 bis 8, **dadurch gekennzeichnet, dass** die Drehplattform (11) auf einem ortsfesten Maschinenständer befestigt werden kann, der in einem schwingungsfrei gelagerten Fundament verankert werden kann.

10. Vorrichtung nach einem der Ansprüche 1 bis 9, **dadurch gekennzeichnet, dass** ein Schutzgehäuse (17) vorhanden ist, in dem die Vorrichtung angeordnet ist.

11. Vorrichtung nach einem der Ansprüche 1 bis 10, **dadurch gekennzeichnet, dass** eine Kalibriereinrichtung vorhanden ist, welche ein in das Bildfeld der Vermessungseinheit (4) und aus diesem heraus verfahrbares Kalibiertarget umfasst.

12. Verfahren zur optischen Vermessung des Außengewinde-Profils (3) von Rohren (1) mit Hilfe einer Vorrichtung nach einem der Ansprüche 1 bis 11, umfassend die folgenden Schritte:
a) Anordnen des zu vermessenden Rohres (1) auf der Auflage (5), sodass die Rohrachse (2) quer zu der Messebene (18) der Vermessungseinheit (7,8) verläuft und das Außengewinde (3) im Strahlengang (23,24) zwischen den Lichtquellen (19,19',21,21') und den zugeordneten Kameras (20,20',22,22') angeordnet ist,
b) Ausrichten der Vermessungseinheit (4) derart, dass die Messebene (18) einen rechten Winkel mit der Rohrachse (2) einschließt,
c) Aufnehmen von Schattenbildern des Außengewindes (3) mittels der Kamera (20,20',22,22') wenigstens einer Messvorrichtung (7,8) sowie Auswerten der Schattenbilder.

13. Verfahren nach Anspruch 12, **dadurch gekennzeichnet, dass** Schritt b) folgende Schritte umfasst:
- Aufnehmen von Schattenbildern der Stirnfläche des Rohres (1) in zwei verschiedenen, in der Messebene (18) liegenden Richtungen des Strahlengangs (23,24), um ein erstes und ein zweites Schattenbild zu erhalten,
- ein- oder zweiachsiges Verschwenken der Vermessungseinheit (4) bis das erste und das zweite Schattenbild der Stirnfläche einer geraden Linie entspricht.

14. Verfahren nach Anspruch 12, **dadurch gekennzeichnet, dass** Schritt b) folgende Schritte umfasst:
- Aufnehmen eines Schattenbilds von zwei bezüglich der Rohrachse (2) diametral gegenüberliegenden Stellen des Außengewindes (3) in einer ersten, in der Messebene (18) liegenden Richtung des Strahlengangs (23,24), um ein erstes und ein zweites Schattenbild des Außengewindes (3) zu erhalten,
- Ermitteln, anhand des ersten und des zweiten Schattenbildes des Außengewindes (3), der Symmetrieachse des Außengewindes (3),
- Ermitteln der Winkelabweichung der Symmetrieachse von einer senkrecht zur Messebene (18) liegenden Achse,
- einachsiges Verschwenken der Vermessungseinheit (4), bis die Winkelabweichung 0° beträgt,
- Wiederholen dieser Schritte, wobei das Schattenbild von zwei bezüglich der Rohrachse (2) diametral gegenüberliegenden Stellen des Außengewindes (3) in einer zweiten, in der Messebene (18) liegenden Richtung des Strahlengangs (23,24) aufgenommen wird, wobei die erste und die zweite Richtung quer zueinander verlaufen, insbesondere in einem Winkel von 90°.

15. Verfahren nach Anspruch 12, 13 oder 14, **dadurch gekennzeichnet, dass** die Schattenbilder in Schritt c) in wenigstens zwei verschiedenen, in der Messebene (18) liegenden Richtungen des Strahlengangs (23,24) aufgenommen werden.

16. Verfahren nach Anspruch 15, **dadurch gekennzeichnet, dass** Schritt c) das Aufnehmen von Schattenbildern mittels der Kameras (20,20',22,22') der wenigstens zwei Messvorrichtungen (7,8) umfasst.

17. Verfahren nach Anspruch 15 oder 16, **dadurch gekennzeichnet, dass** das Aufnehmen von Schattenbildern in Schritt c) zuerst in einer ersten Drehposition der Vermessungseinheit (4) erfolgt, die Vermessungseinheit (4) dann um einen vorbestimmten Winkel um eine senkrecht zur Messebene (18) verlaufende Drehachse (12) gedreht wird und das Aufnehmen von Schattenbildern danach in einer zweiten Drehposition der Vermessungseinheit (4) erfolgt.

## Claims

1. A device for optically measuring the external-thread profile (3) of a pipe (1), comprising a support (5) for the pipe (1) to be measured, an optical measuring unit (4) including at least one measuring device (7,8) comprising a light source (19,19',21,21') and a camera (20,20',22,22') arranged in the optical path (23,24) of the light source (19,19',21,21') for recording a silhouette image of the external-thread profile (3), and a carrier element (6), wherein the optical measuring unit (4) is, in particular rigidly, mounted on the carrier element (6) pivotally held about three spatial axes, **characterized in that** the optical measuring unit (4) comprises at least two measuring devices (7,8) whose optical paths (23,24) cross each other.

2. A device according to claim 1, **characterized in that** the optical paths (23,24) of two measuring devices (7,8) cross each other at an angle of 90°.

3. A device according to claim 1 or 2, **characterized in that** the measuring devices (7,8) are positionable such that the optical path (23,24) of at least one measuring device (7,8) encloses an angle of 10-80°, preferably 25-65°, in particular 35-55°, with the perpendicular line.

4. A device according to claim 1, 2 or 3, **characterized in that** the direction vectors of the crossing optical paths (23,24) span a measuring plane (18), or are located in parallel with a measuring plane (18), wherein the carrier element (6) is rotationally mounted about an axis of rotation (12) located at a right angle to the measuring plane (18).

5. A device according to any one of claims 1 to 4, **characterized in that** a rotary platform (11) rotationally mounted about the axis of rotation (12) is provided to support the carrier element (6).

6. A device according to claim 5, **characterized in that**, between the rotary platform (11) and the carrier element (6), a device for the at least biaxial pivotability of the carrier element (6) relative to the rotary platform (11) about two intersecting axes of rotation (12) extending in parallel with the measuring plane (18), in particular a hexapod (9), is provided.

7. A device according to any one of claims 1 to 6, **characterized in that** the at least two measuring devices (7,8) comprise a telecentric optical path.

8. A device according to any one of claims 1 to 7, **characterized in that** a further measuring device (7,8) comprising a parallelly extending optical path (23,24) is each associated with the at least two measuring devices (7,8).

9. A device according to any one of claims 5 to 8, **characterized in that** the rotary platform (11) may be fastened to a stationary machine stand, which may be anchored in a vibration-freely mounted base.

10. A device according to any one of claims 1 to 9, **characterized in that** a protective housing (17) is provided, in which the device is arranged.

11. A device according to any one of claims 1 to 10, **characterized in that** a calibration device comprising a calibration target movable into and out of the image field of the measuring unit (4) is provided.

12. A method for optically measuring the external-thread profile (3) of a pipe (1) using a device according to any one of claims 1 to 11, comprising the steps of:
a) positioning the pipe (1) to be measured on the support (5) such that the pipe axis (2) extends transversely to the measuring plane (18) of the measuring unit (7,8) and the external thread (3) is arranged in the optical path (23,24) between the light sources (19,19',21,21') and the associated cameras (20,20',22,22');
b) orienting the measuring unit (4) such that the measuring plane (18) encloses a right angle with the pipe axis (2);
c) taking silhouette images of the external thread (3) by the camera (20,20',22,22') of at least one measuring device (7,8) and evaluating said silhouette images.

13. A method according to claim 12, **characterized in that** step b) comprises the steps of:
- taking silhouette images of the end face of the pipe (1) in two different direction located in the measuring plane (18) of the optical path (23,24) in order to obtain a first and a second silhouette image;
- uniaxially or biaxially pivoting the measuring unit (4) until the first and the second silhouette images of the end face correspond to a straight line.

14. A method according to claim 12, **characterized in that** step b) comprises the steps of:
- taking a silhouette image each of two external thread (3) points located diametrically opposite relative to the pipe axis (2), in a first direction located in the measuring plane (18), of the optical path (23,24) in order to obtain a first and a second silhouette image of the external thread (3);
- determining the symmetrical axis of the external thread (3) by way of the first and the second silhouette images of the external thread (3);
- determining the angular deviation of the symmetrical axis from an axis extending perpendicular to the measuring plane (18);
- uniaxially pivoting the measuring unit (4) until said angular deviation is 0°;
- repeating the above steps, wherein the silhouette images of two external thread (3) points located diametrically opposite relative to the pipe axis (2) are taken in a second direction located in the measuring plane (18) of the optical path (23,24), wherein the first direction and the second direction extend transversely to each other, in particular at an angle of 90°.

15. A method according to claim 12, 13 or 14, **characterized in that** the silhouette images in step c) are taken in at least two different directions of the optical path (23,24), which are located in the measuring plane (18).

16. A method according to claim 15, **characterized in that** step c) comprises the taking of silhouette images by the cameras (20,20',22,22') of the at least two measuring devices (7,8).

17. A method according to claim 15 or 16, **characterized in that** the taking of silhouette images in step c) is initially done in a first rotational position of the measuring unit (4), whereupon the measuring unit (4) is rotated by a predefined angle about an axis of rotation (12) extending perpendicular to the measuring plane (18) and the taking of silhouette images is subsequently done in a second rotational position of the measuring unit (4).

## Revendications

1. Dispositif pour la mesure optique du profil de filetage extérieur (3) de tubes (1), comprenant un support (5) pour le tube (1) à mesurer, une unité de mesure optique (4) comprenant au moins un dispositif de mesure (7, 8), qui comprend une source de lumière (19, 19', 21, 21') et une caméra (20, 20', 22, 22') disposée dans le chemin optique (23, 24) de la source de lumière (19, 19', 21, 21') pour l'enregistrement d'une image d'ombre du profil de filetage extérieur (3), et un élément de support (6), l'unité de mesure optique (4) étant disposée, en particulier de manière rigide, sur l'élément de support (6), qui est maintenu de manière à pivoter autour de trois axes spatiaux, **caractérisé en ce que** l'unité de mesure optique (4) comprend au moins deux dispositifs de mesure (7, 8), dont les chemins optiques (23, 24) se croisent.

2. Dispositif selon la revendication 1, **caractérisé en ce que** les chemins optiques (23, 24) de deux dispositifs de mesure (7, 8) se croisent à un angle de 90°.

3. Dispositif selon la revendication 1 ou 2, **caractérisé en ce que** les dispositifs de mesure (7, 8) sont aptes à être arrangé de telle sorte que le chemin optique (23, 24) d'au moins un dispositif de mesure (7, 8) forme un angle de 10-80°, de préférence de 25-65°, en particulier de 35-55°, avec la verticale.

4. Dispositif selon la revendication 1, 2 ou 3, **caractérisé en ce que** les vecteurs de direction des chemins optiques (23, 24) qui se croisent délimitent un plan de mesure (18) ou sont parallèles à un plan de mesure (18), dans lequel l'élément de support (6) est monté à rotation autour d'un un axe de rotation (12) disposé perpendiculairement au plan de mesure (18).

5. Dispositif selon l'une des revendications 1 à 4, **caractérisé en ce qu'**il est prévu une plateforme tournante (11) monté à rotation autour de l'axe de rotation (12), qui porte l'élément de support (6).

6. Dispositif selon la revendication 5, **caractérisé en ce que,** entre la plateforme tournante (11) et l'élément de support (6), il est prévu un dispositif pour permettre le pivotement sur au moins deux axes de l'élément de support (6) par rapport à la plateforme tournante (11) autour de deux axes de rotation (12) qui se croisent, parallèles par rapport au plan de mesure (18), en particulier un hexapode (9).

7. Dispositif selon l'une des revendications 1 à 6, **caractérisé en ce que** les au moins deux dispositifs de mesure (7, 8) ont un chemin optique télécentrique.

8. Dispositif selon l'une des revendications 1 à 7, **caractérisé en ce qu'**un dispositif de mesure (7, 8) additionnel est associé à chacun des au moins deux dispositifs de mesure (7, 8), configuré avec un chemin optique (23, 24) parallèle à celui-ci.

9. Dispositif selon l'une des revendications 5 à 8, **caractérisé en ce que** la plateforme tournante (11) peut être fixé à un support de machine fixe, qui peut être ancré dans une fondation montée sans vibrations.

10. Dispositif selon l'une des revendications 1 à 9, **caractérisé en ce qu'**il est prévu un boîtier de protection (17), dans lequel le dispositif est disposé.

11. Dispositif selon l'une des revendications 1 à 10, **caractérisé en ce qu'**il est prévu un appareil d'étalonnage, qui comprend une cible d'étalonnage qui peut être déplacée dans et hors du champ d'image de l'unité de mesure (4).

12. Procédé pour la mesure optique du profil de filetage extérieur (3) de tubes (1) à l'aide d'un dispositif selon l'une des revendications 1 à 11, comprenant les étapes suivantes :
a) placement du tube (1) à mesurer sur le support (5), de sorte que l'axe du tube (2) s'étend transversalement au plan de mesure (18) de l'unité de mesure (7, 8) et le filetage extérieur (3) se trouve dans le chemin optique (23, 24) entre les sources de lumière (19, 19', 21, 21') et les caméras (20, 20', 22, 22') associées,
b) alignement de l'unité de mesure (4) de telle manière que le plan de mesure (18) forme un angle droit avec l'axe du tube (2),
c) enregistrement d'images d'ombre du filetage extérieur (3) au moyen de la caméra (20, 20', 22, 22') d'au moins un dispositif de mesure (7, 8), et évaluation des images d'ombre.

13. Procédé selon la revendication 12, **caractérisé en ce que** l'étape b) comprend les étapes suivantes:
- enregistrement d'images d'ombre de la face avant du tube (1) dans deux directions différentes du chemin optique (23, 24) disposées dans le plan de mesure (18), afin d'obtenir une première et une deuxième image d'ombre,
- pivotement sur un ou deux axes de l'unité de mesure (4) jusqu'à ce que la première et la deuxième image d'ombre de la face avant correspond à une ligne droite.

14. Procédé selon la revendication 12, **caractérisé en ce que** l'étape b) comprend les étapes suivantes:
- enregistrement d'une image d'ombre, à partir de deux points diamétralement opposés par rapport à l'axe du tube (2), du filetage extérieur (3) dans une première direction du chemin optique (23, 24), disposée dans le plan de mesure (18), afin d'obtenir une première et une deuxième image d'ombre du filetage extérieur (3),
- détermination, sur la base de la première et de la deuxième image d'ombre du filetage extérieur (3), de l'axe de symétrie du filetage extérieur (3),
- détermination de la déviation angulaire de l'axe de symétrie par rapport à un axe perpendiculaire au plan de mesure (18),
- pivotement sur un seul axe de l'unité de mesure (4), jusqu'à ce que la déviation angulaire soit de 0°,
- répétition de ces étapes, dans lequel l'image d'ombre à partir de deux points diamétralement opposés par rapport à l'axe du tube (2) du filetage extérieur (3) est enregistrée dans une deuxième direction du chemin optique (23, 24), disposée dans le plan de mesure (18), dans lequel la première et la deuxième direction sont transversaux l'un à l'autre, en particulier à un angle de 90°.

15. Procédé selon la revendication 12, 13 ou 14, **caractérisé en ce que** dans l'étape c), les images d'ombre sont enregistrées dans au moins deux directions différentes du chemin optique (23, 24), disposées dans le plan de mesure (18).

16. Procédé selon la revendication 15, **caractérisé en ce que** l'étape c) comprend l'enregistrement d'images d'ombre au moyen des caméras (20, 20', 22, 22') des au moins deux dispositifs de mesure (7, 8).

17. Procédé selon la revendication 15 ou 16, **caractérisé en ce que** dans l'étape c), l'enregistrement d'images d'ombre est effectué d'abord dans une première position de rotation de l'unité de mesure (4), puis l'unité de mesure (4) est tournée d'un angle prédéterminé autour d'un axe de rotation (12) perpendiculaire au plan de mesure (18), et l'enregistrement d'images d'ombre est ensuite effectué dans une deuxième position de rotation de l'unité de mesure (4).
